# EUROPEAN PATENT APPLICATION

(11) **EP 4 167 207 A1**
(43) Date of publication of application: **19.04.2023**
(21) Application number: 20939742.1
(22) Date of filing: 12.06.2020
(51) Int. Cl.: G08G 1/00, G08G 1/09, G08G 1/0968

(54) **DEMAND ADJUSTMENT DEVICE, VEHICLE, AND DEMAND ADJUSTMENT SYSTEM**

(71) Applicant: MITSUBISHI ELECTRIC CORPORATION, Chiyoda-ku Tokyo 100-8310 (JP)
(72) Inventor: ISHIDA Ryo, Tokyo 100-8310 (JP)
(74) Representative: Hoffmann Eitle
(86) International application number: PCT/JP2020/023133
(87) International publication number: WO 2021/250878

(57) **Abstract**

To provide a demand arbitration apparatus, a vehicle, and a demand arbitration system which can suppress that the travel routes of each vehicle are different with each other, when a plurality of vehicles of a vehicle group travel to a common destination. A demand arbitration apparatus (40) manages a vehicle group which grouped a plurality of vehicles; sets a common destination of the vehicle group; and generates a travel route from the current position of each belonging vehicle to the common destination so that the travel route of each belonging vehicle overlaps with each other, and transmits to each belonging vehicle.

## Description

### TECHNICAL FIELD

The present disclosure is related with a demand arbitration apparatus, a vehicle, and a demand arbitration system.

### BACKGROUND ART

The patent document 1 discloses a server which changes the destination according to a requirement of the user getting on the vehicle, and transmits the travel route to the destination.

### CITATION LIST

### Patent Literature

Patent document 1: WO 2019/189525 A

### SUMMARY OF INVENTION

### Technical Problem

However, the technology of the patent document 1 is the technology supposing the case where one vehicle travels to the destination independently, and a case where a plurality of vehicles of a vehicle group travel to the common destination is not considered. If the technology of the patent document 1 is applied to each vehicle of the vehicle group, the travel route of each vehicle will be generated individually. Accordingly, the travel routes of the plurality of vehicles may be different with each other. Accordingly, due to the road state (traffic congestion and the like) of the traveling road of each vehicle, and a change of the weather condition, a variation in the arrival times to the destination of each vehicle occurs easily. When trying to drop in a common drive-through and the like on the way, since the traveling roads are different, it becomes difficult to drop in the intermediate common destination smoothly.

Then, the purpose of the present disclosure is to provide a demand arbitration apparatus, a vehicle, and a demand arbitration system which can suppress that the travel routes of each vehicle are different with each other, when a plurality of vehicles of a vehicle group travel to a common destination.

### Solution to Problem

A demand arbitration apparatus according to the present disclosure including:
a communication unit that communicates with a plurality of vehicles;
a group control unit that manages a vehicle group which grouped a plurality of vehicles;
a demand arbitration unit that sets a common destination of the vehicle group, based on a requirement received from a belonging vehicle which belongs to the vehicle group; and
a guide route generation unit that generates a travel route from a current position of the each belonging vehicle to the common destination, and transmits to the each belonging vehicle, about the each belonging vehicle belonging to the vehicle group,
wherein the guide route generation unit generates the travel route of the each belonging vehicle so that the travel route of the each belonging vehicle overlaps with each other.

A vehicle according to the present disclosure including:
a communication unit that communicates with a demand arbitration apparatus which performs generation and transmission of a travel route of each belonging vehicle which belongs to a vehicle group;
a group setting unit that, when a setting of a vehicle group which grouped a plurality of vehicles including an own vehicle or a requirement of participation in the vehicle group which already exists is performed by an user of the own vehicle, transmits information on the setting or the requirement of participation by the user, to the demand arbitration apparatus;
a demand transmission unit that, when a requirement regarding a setting of a common destination of the vehicle group is performed by the user of the own vehicle, transmits the requirement to the demand arbitration apparatus;
a travel route reception unit that receives the travel route of the own vehicle among belonging vehicles which belong to the vehicle group, from the demand arbitration apparatus, and sets the received travel route as the travel route of the own vehicle.

A demand arbitration system according to the present disclosure including:
the demand arbitration apparatus, and
a plurality of the vehicles.

### Advantage of Invention

According to the demand arbitration apparatus, the vehicle, and the demand arbitration system of the present disclosure, since the travel route of each belonging vehicle is generated so that the travel route of each belonging vehicle overlaps with each other, the difference of the road states (traffic congestion and the like) from which each belonging vehicle is affected can be reduced, and the difference of the arrival times to the destination of each belonging vehicle can be reduced. When a drop in point occurs during traveling, it is easy to overlap the travel routes to the drop in point of each belonging vehicle, and it is easy to coincide the arrival times to the drop in point.

### BRIEF DESCRIPTION OF THE DRAWINGS

FIG. 1 is a figure for explaining generation of the travel route according to Embodiment 1;
FIG. 2 is a schematic configuration diagram of the demand arbitration system according to Embodiment 1;
FIG. 3 is a block diagram of the vehicle system according to Embodiment 1;
FIG. 4 is a hardware configuration figure of the vehicle system according to Embodiment 1;
FIG. 5 is a block diagram of the demand arbitration apparatus according to Embodiment 1;
FIG. 6 is a hardware configuration figure of the demand arbitration apparatus according to Embodiment 1;
FIG. 7 is a figure for explaining data of the user database according to Embodiment 1;
FIG. 8 is a figure for explaining data of the facility database according to Embodiment 1;
FIG. 9 is a figure for explaining data of the group database according to Embodiment 1;
FIG. 10 is a figure for explaining generation of the travel route according to Embodiment 1;
FIG. 11 is a flowchart for explaining processing procedure of the vehicle system according to Embodiment 1;
FIG. 12 is a sequence diagram for explaining processing procedure of the demand arbitration system according to Embodiment 1; and
FIG. 13 is a figure for explaining generation of the travel route according to Embodiment 2.

### DETAILED DESCRIPTION OF THE EMBODIMENTS

In the society expected that the automatic driving vehicle will become common in the future, it is expected that the needs of utilizing effectively time when a user (occupant) spends in the automatic driving vehicle will increase. As an example of effective time utilization in the automatic driving vehicle, matters regarding meal of user can be considered.

For example, there is a case where a plurality of vehicles (vehicle group) which travel to the same common destination exist, and occupants want to utilize a facility (for example, drive-through) during automatic driving. In this case, the automatic driving vehicle needs to change a travel route so as to go to the final destination via its facility. At this time, according to the types and the like of the car navigation apparatus of the vehicle which performs the automatic driving, even if the same destination is set, the travel routes does not necessarily become the same.

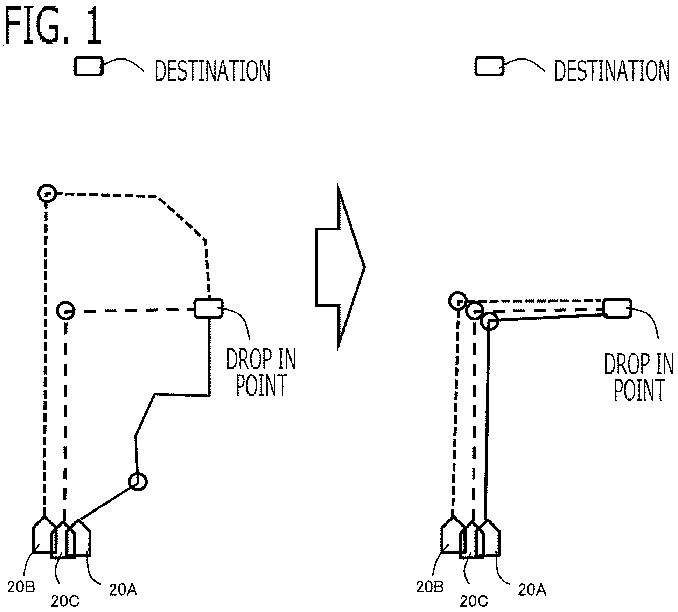

The left side of FIG. 1 shows a case where the same destination is inputted into three vehicles having the same current position, but mutually different travel routes are set unlike the present embodiment. When a plan is changed so as to drop in the same facility, such as the drive-through, at a certain time point during each vehicle is traveling the different travel route, the arrival time of each vehicle is largely influenced by the traveling road state of each vehicle. The circles on the left side of FIG. 1 is each vehicle position at the time point when the plan is changed so as to drop in the facility. The first vehicle 20A is caught in traffic congestion on the way, and its travel distance is short. The second vehicle 20B has a good road state, and its travel distance is the longest. The travel distance of the third vehicle 20C becomes medium between the travel distance of the first vehicle 20A and the travel distance of the second vehicle 20B.

Since the travel route and the position of each vehicle at the time point when the plan is changed are different with each other, the travel route to the drop in point of each vehicle are different for every vehicle, and the arrival time to the drop in point are different for every vehicle. Especially, the third vehicle 20C passes the drop in point, after that, it returns and goes to the drop in point. In this way, it is considered that a time waiting for other vehicles at the drop in point, and a traveling for returning and going to the drop in point impair the convenience of user.

In this way, in the patent document 1 mentioned above, since the travel route is independently set for each vehicle, the travel routes set for the plurality of vehicles may be different with each other.

On the other hand, according to the embodiment explained in the following, as shown in the right side of FIG. 1, when the same destination is set for the three vehicles of the same vehicle group, the travel routes of respective vehicles are generated so as to overlap with each other. Accordingly, during traveling to the destination, the difference of the road states (traffic congestion and the like) from which each vehicle is affected can be reduced, and the difference of the arrival times to the destination of each vehicle can be reduced. The circles on the right side of FIG. 1 show each vehicle position at the time point when the plan is changed so as to drop in the facility, and each vehicle position becomes the almost same position. Accordingly, it is easy to overlap the travel routes from the circle of each vehicle to the drop in point with each other, and it is easy to coincide the arrival times to the drop in point.

The following Embodiments 1 will explain an example of the demand arbitration apparatus, the vehicle, and the demand arbitration system 1 which can set similar travel routes to each belonging vehicle, when the common destination is set to a plurality of belonging vehicles which belong to a vehicle group.

Hereinafter, the embodiment of the demand arbitration apparatus, the vehicle, and the demand arbitration system 1 according to the present disclosure will be explained in detail, while referring to the attached figures arbitrarily. Detailed explanation more than necessary may be omitted. For example, the detailed explanation of the matter already known well, and the redundant explanation of substantially same configuration may be omitted. This is for avoiding that the following explanation becomes redundant unnecessarily, and making a person skilled in the art understand easily. The attached figures and the following explanation are provided for a person skilled in the art to understand the present disclosure, and it is not intended that these limit the subject described in the claims.

### 1. Embodiment 1

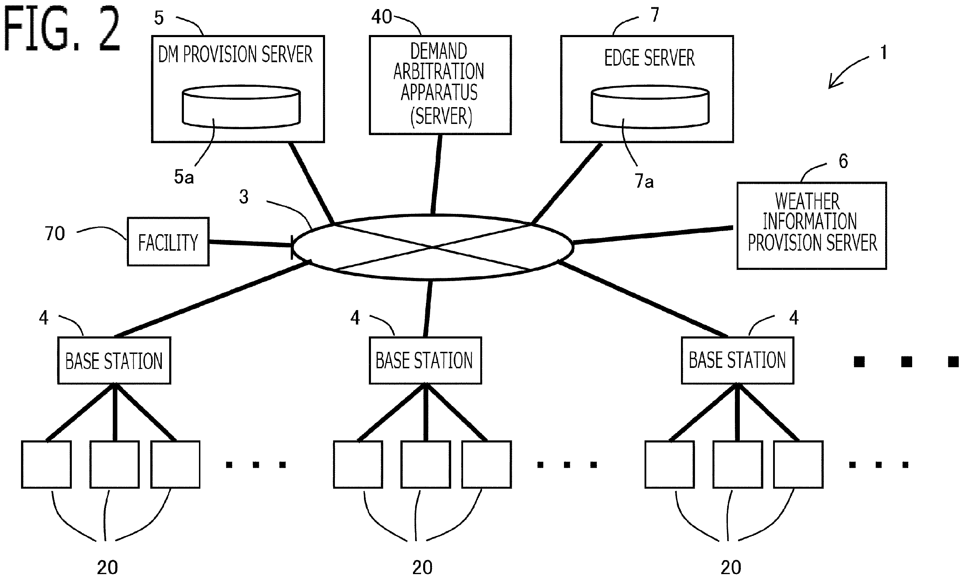

The demand arbitration apparatus 40, the vehicle 20, and the demand arbitration system 1 according to Embodiment 1 will be explained with reference to figures. FIG. 2 is a figure showing the schematic whole configuration of the demand arbitration system 1.

### 1-1. Demand Arbitration System 1

The demand arbitration system 1 is provided with a demand arbitration apparatus 40 and a plurality of vehicles 20 to which a travel route is transmitted from the demand arbitration apparatus 40. In the present embodiment, the demand arbitration system 1 is provided with a DM provision server 5, an edge server 7, and a weather information provision server 6.

The demand arbitration apparatus 40, the plurality of vehicles 20, the DM provision server 5, the edge server 7, and the weather information provision server 6 are connected via a network 3 so as to communicate with each other. The network 3 is a wireless communication network, such as an internet network or a wireless LAN (Local Area Network), for example. A plurality of facilities 70 (restaurant and the like) are connected to the network 3. The demand arbitration apparatus 40 performs communication with each facility 70 according to a user requirement, and reserves the facility, or orders a menu.

The demand arbitration apparatus 40 is provided in a server connected to the network 3. That is, a function of the demand arbitration apparatus 40 is realized by the server executing an application (a program) of the demand arbitration apparatus 40. In the present embodiment, the server is a crowd server, for example. The network 3 is a core network, for example. The demand arbitration apparatus 40 may be disposed close to an area to control.

The DM provision server 5 has a DM database 5a (for example, hard disk) storing a dynamic map which is dynamic road environmental information required for implementation of automatic driving of the vehicle 20. The DM provision server 5 updates periodically the dynamic map stored in the DM database 5a. According to the periodical requirement from the vehicle 20 or the demand arbitration apparatus 40, the DM provision server 5 acquires data of the dynamic map from the DM database 5a, and transmits to the vehicle 20 or the demand arbitration apparatus 40 each time.

Herein, the dynamic map is a digital map data which combined a static three-dimensional high precision map data, with the traffic congestion information of road, and the information of the position where a dynamic change of the traffic regulation due to accident or road construction, or the like occurred. By using the dynamic map supplied from the DM provision server 5, the vehicle 20 can perform automatic driving while estimating the around environmental information correctly, based on detection outputs of sensors (for example, a millimeter wave radar, an ultrasonic sensor, an optical camera, and the like) mounted in the own vehicle.

The edge server 7 is disposed arbitrarily (for example, a plurality of sets), in order to determine condition of the real time road environment where the vehicle 20 travels (for example, detection and collection of a dynamic change of traffic congestion, accident, or road construction mentioned above). For example, a plurality of monitoring sensors are connected to the one edge server 7. The edge server 7 has a sensor detection information database 7a storing information (sensor detection information) detected by the plurality of monitoring sensors. The plurality of monitoring sensors are disposed at a pole of road, a pole or a guardrail of highway, and the like, for example, in order to detect the condition of real time road environment.

The edge server 7 determines that a traffic congestion, an accident, or a road construction occurred in the road, for example, based on the sensor detection information detected by the plurality of monitoring sensors; and transmits road information including information on its occurrence position, to the DM provision server 5 and the vehicle 20. This road information is utilized for updating the dynamic map in the DM provision server 5, for example.

The weather information provision server 6 collects and updates weather information, such as a weather, an air temperature, and a humidity, regularly; and transmits the weather information to the vehicle 20 and the demand arbitration apparatus 40 each time, according to periodical requirement from the vehicle 20 and the demand arbitration apparatus 40.

Each vehicle 20 is connected to a near base station 4 via wireless communication. A plurality of base stations 4 are distributed and provided at each point so as to cover a road network. The base station 4 is a radio station which performs a wireless communication with the vehicle system 25 mounted in the vehicle which exists in the communication area, using the wireless communication standard of cellular system, such as 4G and 5G; and is connected to the network 3. Accordingly, each vehicle 20 and the demand arbitration apparatus 40 are communicatively connected via the base station 4 and the network 3.

### 1-2. Vehicle

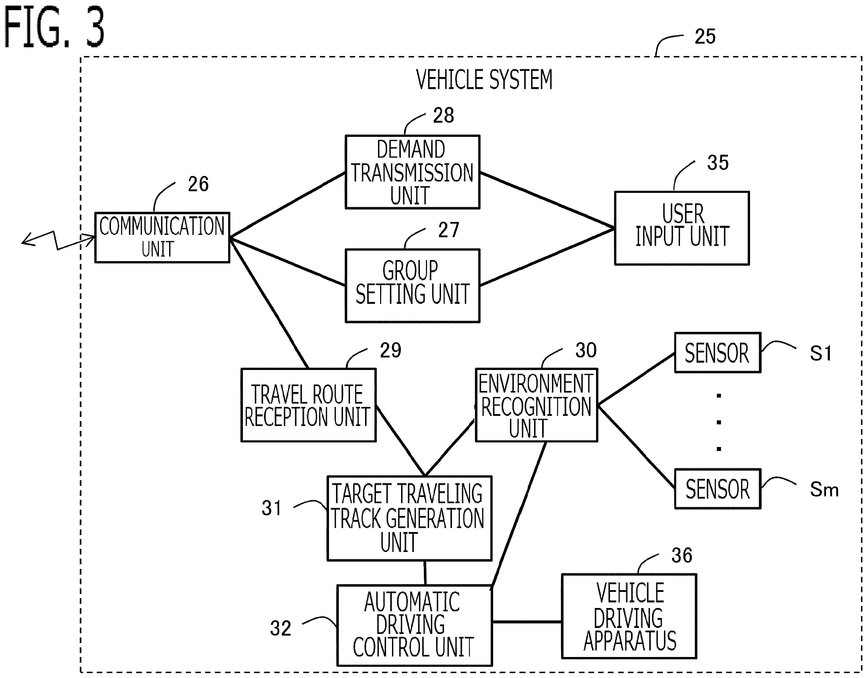

Fig. 3 shows a schematic configuration of a vehicle system 25 mounted in each vehicle 20. The vehicle system 25 is provided with a communication unit 26, a group setting unit 27, a demand transmission unit 28, and a travel route reception unit 29. The vehicle system 25 is provided with an environment recognition unit 30, a target traveling track generation unit 31, and an automatic driving control unit 32, in order to perform the automatic driving. The vehicle system 25 is provided with a user input unit 35, sensors S1 to Sm (m is an integer greater than or equal to 2), and a vehicle driving apparatus 36.

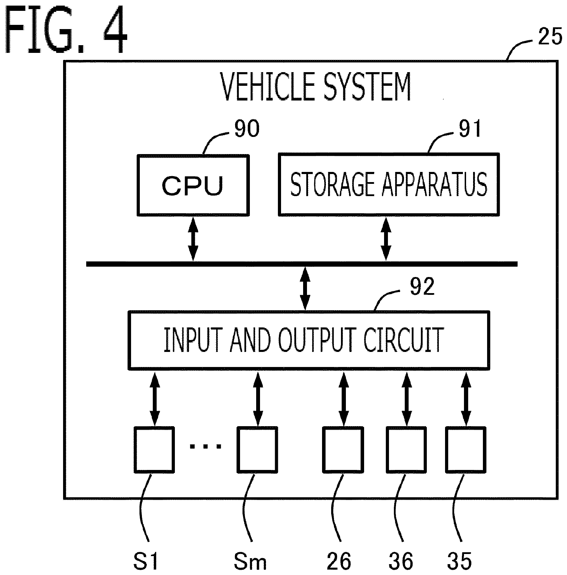

Each function of the vehicle system 25 is realized by processing circuits provided in the vehicle system 25. As shown in FIG. 4, specifically, the vehicle system 25 is provided with an arithmetic processor 90, storage apparatuses 91, an input and output circuit 92 which outputs and inputs external signals to the arithmetic processor 90, and the like.

As the arithmetic processor 90, CPU (Central Processing Unit), ASIC (Application Specific Integrated Circuit), IC (Integrated Circuit), DSP (Digital Signal Processor), FPGA (Field Programmable Gate Array), GPU (Graphics Processing Unit), AI (Artificial Intelligence) chip, various kinds of logical circuits, various kinds of signal processing circuits, and the like may be provided. As the arithmetic processor 90, a plurality of the same type ones or the different type ones may be provided, and each processing may be shared and executed. As the storage apparatuses 91, various kinds of storage apparatus, such as RAM (Random Access Memory), ROM (Read Only Memory), a flash memory, EEPROM (Electrically Erasable Programmable Read Only Memory), a hard disk, and a DVD apparatus, are used.

The input and output circuit 92 is provided with a communication device, an A/D converter, a driving circuit, and the like. The input and output circuit 92 is connected to the user input unit 35, the sensors S1 to Sm, the communication unit 26 (wireless communication apparatus), the vehicle driving apparatus 36, and the like.

The vehicle system 25 may be configured by the single control unit, or may be configured by distributing to a plurality of control units.

The vehicle system 25 operates according to program and data which are stored in the storage apparatus 91. For example, the target traveling track generation unit 31 generates a target traveling track for traveling along with the travel route of the own vehicle received from the demand arbitration apparatus 40 by the travel route reception unit 29, considering the traveling information around the own vehicle recognized by the environment recognition unit 30. The automatic driving control unit 32 controls the vehicle driving apparatus 36, and performs the automatic driving of the own vehicle along with the target traveling track.

The automatic driving of the vehicle 20 includes a function which reduces speed beforehand so as to able to stop safely without colliding, and stops the vehicle 20, considering a distance with an obstacle (for example, other vehicle, a two-wheeled vehicle such as a motorbike, a pedestrian, a guardrail, an electric pole, a pole, a facility). The automatic driving of the vehicle 20 includes a function which follows while maintaining a constant interval with other vehicle which travels in front of the vehicle 20. The automatic driving of the vehicle 20 includes a function which controls the steering of the vehicle 20 so as not to deviate from lane. However, each function mentioned above is an example of the automatic driving, and is not limited to these functions.

The user input unit 35 is an apparatus that a user of the vehicle (for example, the driver or the fellow passenger of the vehicle 20) can input various kinds of data or information. For example, the user input unit 35 receives operation of the user to a setting screen of the destination shown on HMI (Human Machine Interface) mounted in the vehicle 20. The user input unit 35 outputs information inputted by the user (for example, information on the destination, setting information of the vehicle group), to the vehicle system 25. The user input units 35 may be an information terminal apparatus owned by the user, such as a smart phone and a tablet PC.

The user input unit 35 is connected with the group setting unit 27, and can perform creation of the vehicle group, and participation in the vehicle group, on a group setting screen. In the creation of the vehicle group, a group name, a vehicle ID registered into the vehicle group, a common destination, a password (unnecessary to set), and the like are inputted, and the vehicle group is created. The input of group information is an example and is not limited to this.

The group setting unit 27 will transmit the information on the vehicle group to the demand arbitration apparatus 40 via the communication unit 26, when the vehicle group is created. The information on the vehicle group (the group name, the vehicle ID registered into the group, the password) is stored in a group database DBc of the demand arbitration apparatus 40.

In the case of participating in the vehicle group set by other vehicle, when the user of the vehicle inputs the group name via the user input unit 35, the group setting unit 27 transmits the group name to the demand arbitration apparatus 40, and a candidate of the vehicle group is sent from the demand arbitration apparatus 40. The user of the vehicle selects the vehicle group that the own vehicle participates, from its candidate. If the password is set, the user is made to input the password. The selection information of the vehicle group is transmitted to the demand arbitration apparatus 40 via the communication unit 26, and the demand arbitration apparatus 40 stores the vehicle ID in the group database DBc for registering the vehicle into the vehicle group.

The demand transmission unit 28 transmits a requirement regarding the setting of the common destination of the vehicle group which was set by the user of the own vehicle via the user input unit 35, to the demand arbitration apparatus 40 via the communication unit 26.

As described in detail later, HMI shows a selection screen of facilities (for example, facilities where the vehicle 20 can drop in, such as a convenience store, a restaurant, a drive-through, and a service area) proposed by the demand arbitration apparatus 40 based on the user operation, in addition to the group setting screen and the destination setting screen. In this case, the user operation to the selection screen of facilities (for example, approval operation for approving the proposed facility) is inputted into the user input unit 35.

The sensors S1 to Sm are provided in the vehicle 20 in order to detect an environment around the vehicle 20. Information detected by each sensor S1 to Sm is outputted to the environment recognition unit 30. The sensors S1 to Sm include a GPS receiver (Global Positioning System), an on-vehicle camera, an around view camera, a radar, and a laser range finder, for example.

The GPS receiver receives a plurality of signals which show position (coordinates) of each GPS satellite and transmission time, from a plurality of GPS satellites . The GPS receiver outputs position information of the vehicle 20 to the vehicle system 25, based on the plurality of received signals.

The on-vehicle camera is a camera which has an image sensor, such as CCD (Charge Coupled Device) or CMOS (Complementary Metal Oxide Semiconductor) . The camera is installed, for example in the center of vehicle body front part of the vehicle 20, and images a range of front center as a detection range. Specifically, the camera detects obstacle and traffic signal which exist in front of the own vehicle. The camera can execute image processing using the data of the imaged picture, and can detect information which indicates a relation between the obstacle and the own vehicle (for example, information on speed and position of the obstacle on the basis of the own vehicle) which was detected by its image processing, or can detect position, size, and color of signal light of the traffic signal.

The around view camera is configured using a plurality of cameras installed in the body front, the body back, and the body side of the vehicle 20 (for example, total six including two of the body front, two of the body back, two of the body side), respectively. The around view camera detects white line near the vehicle 20, other vehicle of adjacent lane, and the like.

The radar is configured using a plurality of radars (for example, two) installed in the body front and the body back of the vehicle 20, respectively. The radar may be installed only in the body front of the vehicle 20. The radar is configured, for example using a millimeter wave radar, a sonar radar, and a LiDAR (Light Detection And Ranging, Laser Imaging Detection And Ranging). The radar irradiates a radio wave, such as an ultrasonic wave or a millimeter wave, while scanning in a limited angle range. By receiving its reflected wave and detecting a time difference between the start time of irradiation and the received time of the reflected wave, the radar detects a distance between the own vehicle and the obstacle, and a direction of the obstacle viewed from the own vehicle.

The laser range finder is installed in the body front right side, the body front left side, the body side right side, the body side left side, the body back right side, and the body back left side of the vehicle 20, respectively. The laser range finder detects an obstacle and the like which exists in the front right side, the front left side, the side right side, the side left side, the back right side, and the back left side of the vehicle 20, respectively. Specifically, the laser range finder irradiates a laser light, while scanning in a constant wide angle range, respectively. By receiving its reflected light and detecting a time difference between the start time of irradiation and the received time of the reflected light, the laser range finder detects a distance between the own vehicle and the obstacle, and a direction of the obstacle viewed from the own vehicle.

The sensor which configures the sensors S1 to Sm is not limited to the on-vehicle camera, the around view camera, radar, and the laser range finder which were mentioned above, and may include a gyro sensor, an acceleration sensor, a magnetic field sensor, a tilt sensor, a temperature sensor, an air pressure sensor, a humidity sensor, and an illuminance sensor, for example.

The communication unit 26 is configured by a wireless communication apparatus which performs a wireless communication using the standard of cellular system, such as 4G and 5G. The communication unit 26 is connected to the external apparatuses (the demand arbitration apparatus 40, the DM provision server 5, the edge server 7, and the weather information provision server 6) via the base station 4 and the network 3. The communication unit 26 transmits data and information which were transmitted from the external apparatus to each part of the vehicle system 25, or transmits data and information which were transmitted from each part of the vehicle system 25 to the external apparatus. The communication units 26 (wireless communication apparatus) may be a portable communication apparatus, such as a smart phone owned by the user.

The travel route reception unit 29 receives the travel route of the own vehicle among the belonging vehicles which belong to the vehicle group, from the demand arbitration apparatus 40 via the communication unit 26, and sets the received travel rout as the travel route of the own vehicle . The travel route transmitted from the demand arbitration apparatus 40 consists of information on a plurality of nodes to the common destination, a target time which passes each node, and the like.

As mentioned above, when the setting of the vehicle group which grouped a plurality of vehicles including the own vehicle or the requirement of participation in the vehicle group which already exists is performed by the user of the own vehicle via the user input unit 35, the group setting unit 27 transmits information on the setting or the requirement of participation of the user, to the demand arbitration apparatus 40 via the communication unit 26.

The demand transmission unit 28 transmits a requirement regarding the setting of the common destination of the vehicle group which was set by the user of the own vehicle via the user input unit 35, to the demand arbitration apparatus 40 via the communication unit 26.

The environment recognition unit 30 recognizes environmental information around the own vehicle including a current position of the own vehicle, based on the detection information of the plurality of sensors S1 to Sm, and outputs a recognition result to the target traveling track generation unit 31.

The target traveling track generation unit 31 generates a target traveling track for traveling along with the travel route of the own vehicle received from the demand arbitration apparatus 40, considering the around environmental information. The target traveling track generation unit 31 is provided with a local track generation unit and a route evaluation unit.

The local track generation unit acquires road information and weather information, corresponding to the position of the own vehicle acquired from the environment recognition unit 30, from the dynamic map which was supplied from the DM provision server 5, and the weather information which was supplied from the weather information provision server 6. Then, the local track generation unit generates a target traveling track capable of traveling safely, about a local route in a specified distance interval in front of the own vehicle within the travel route transmitted from the demand arbitration apparatus 40, considering the around environmental information (road information, weather information, other vehicle, obstacle, traffic information). When it is necessary to bypass the travel route transmitted from the demand arbitration apparatus 40, the local track generation unit generates a travel route and a target traveling track which bypass the travel route. The target traveling track is time series data that consist of time, latitude, longitude, vehicle speed, and vehicle orientation (for example, azimuth of the forward and backward direction of vehicle).

The route evaluation unit objectively evaluates suitability of the travel route transmitted from the demand arbitration apparatus 40, according to a predetermined algorithm. About the travel route of the demand arbitration apparatus 40, the route evaluation unit evaluates whether or not the own vehicle can arrive at a requested arrival time which is set by the user, based on, for example, the traffic restriction on the route, the presence or absence of the obstacle, and the prediction result of the arrival time; and calculates a score as the evaluation result. When this calculated score value becomes less than a predetermined threshold value, the route evaluation unit instructs regeneration of route, to the demand arbitration apparatus 40.

The automatic driving control unit 32 performs the automatic driving of the own vehicle along with the target traveling track. The automatic driving control unit 32 calculates a command value of driving force of wheel, a command value of braking force of wheel, a command value of steering angle of wheel, an operation command value of light, such as a direction indicator, and the like, for making the own vehicle travel along with the target traveling track. Then, the automatic driving control unit 32 transmits each control command value to the vehicle driving apparatus 36. As the vehicle driving apparatus 36, a power apparatus, a brake apparatus, a steering apparatus, a light apparatus, and the like are provided. The power apparatus is provided with a driving force source, such as an internal combustion engine, an electric motor, and the like, and a driving force outputted from the driving force source is transmitted to the wheels. The power apparatus outputs a driving force according to the command value of driving force. The brake apparatus is provided with an electric brake and generates a braking force according to the command value of braking force. The steering apparatus is provided with an electric steering apparatus and changes a steering angle according to the command value of the steering angle. The light apparatus is provided with a direction indicator, a headlight, a brake lamp, and the like, and makes each light turn on according to the operation command value of each light, such as the direction indicator.

### 1-3. Demand Arbitration Apparatus 40

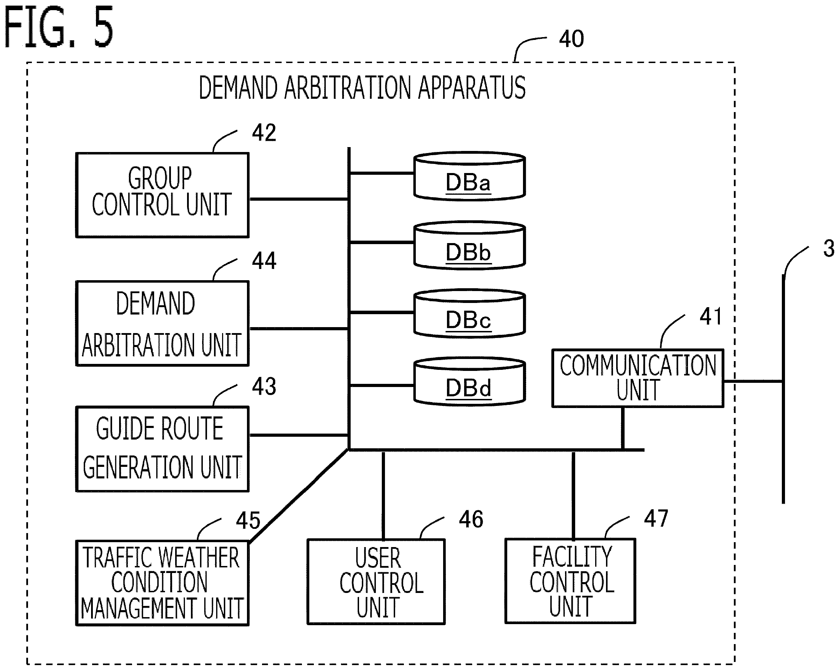

As shown in FIG. 5, the demand arbitration apparatus 40 is provided with a communication unit 41, a group control unit 42, a guide route generation unit 43, a demand arbitration unit 44, a traffic weather condition management unit 45, a user control unit 46, a facility control unit 47, and the like.

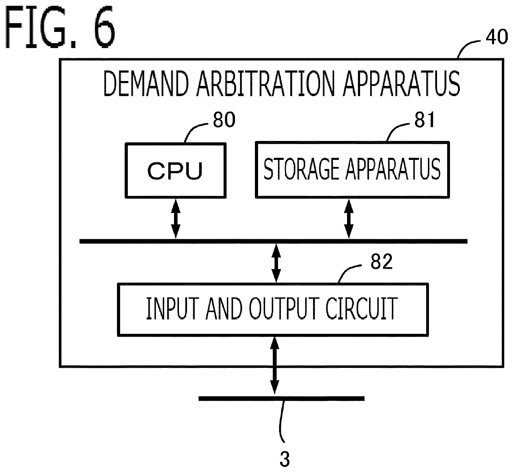

Each function of the demand arbitration apparatus 40 is realized by processing circuits provided in the demand arbitration apparatus 40 (in this example, server) . As shown in FIG. 6, specifically, the demand arbitration apparatus 40 is provided with an arithmetic processor 80, storage apparatuses 81, an input and output circuit 82 which outputs and inputs external signals to the arithmetic processor 80, and the like.

As the arithmetic processor 80, CPU, ASIC, IC, DSP, FPGA, GPU, AI chip, various kinds of logical circuits, various kinds of signal processing circuits, and the like are provided. As the arithmetic processor 80, a plurality of the same type ones or the different type ones may be provided, and each processing may be shared and executed. As the storage apparatuses 81, various kinds of storage apparatus, such as RAM, ROM, a flash memory, EEPROM, a hard disk, and a DVD apparatus, are used. The input and output circuit 82 is provided with a communication device and the like connected to the network 3. The demand arbitration apparatus 40 operates according to program and data stored in the storage apparatus 81.

The communication unit 41 is mainly configured by the communication device of the input and output circuit 82. The communication unit 41 communicates with a plurality of vehicles 20, the DM provision server 5, the edge server 7, the weather information provision server 6, the plurality of information terminal apparatuses of facilities 70, and the like via the network 3.

The traffic weather condition management unit 45 receives constantly the data of dynamic map supplied from the DM provision server 5, and the weather information supplied from the weather information provision server 6, and stores in the storage apparatus 81. The traffic weather condition management unit 45 outputs the data of dynamic map and the weather information which were received, to the guide route generation unit 43.

The user control unit 46 accesses the user databases DBa stored in the storage apparatus 81, and manages information regarding vehicles and users which were registered as the users of the demand arbitration system 1 (for example, extraction, new registration, updating, deletion, and the like).

The facility control unit 47 accesses the facility database DBb stored in the storage apparatus 81, and manages facility information corresponding to the plurality of information terminal apparatuses 70 of facilities which were communicatively connected with the demand arbitration apparatus 40 (for example, extraction, new registration, updating, deletion, and the like).

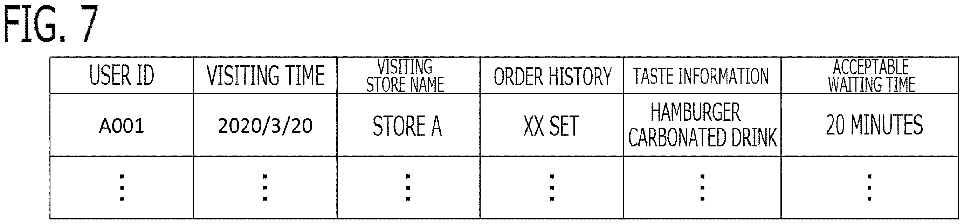

The user database DBa is configured by RDB (Relational Data Base), for example, and stores user information registered as the user of the demand arbitration system 1. FIG. 7 is a figure showing a constructional example of the user data registered in the user database DBa.

As shown in FIG. 7, the user database DBa store user data in which user information of one record is combined for each user. The user information is information that correlates a visiting time at facility, a visiting facility name, an order history, taste information (information on user taste of food), and information on acceptable waiting time that the user does not feel stress, with each user ID which is identification information of user. For example, according to the user information of user ID "A001", it can be turned out that its user likes "hamburger, carbonated drink, ...", its user visited at the facility A on March 20, 2020, and its user ordered "XX set". And, according to the user information of user ID "A001", it can be turned out that the time (possible waiting time) that its user can wait for receiving ordered dishes of the drive-through and the like is "20 minutes".

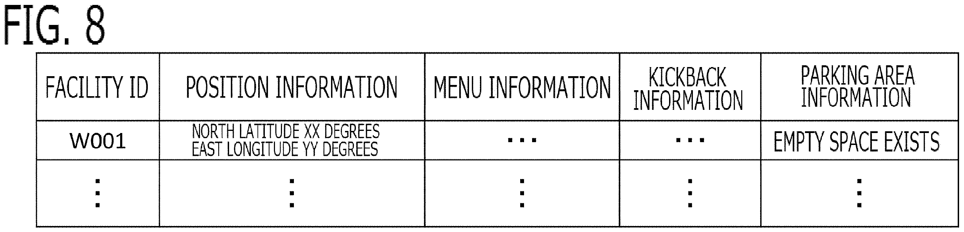

The facility database DBb is configured, for example using RDB, and stores information regarding the plurality of facilities registered as an available place of the demand arbitration system 1. FIG. 8 is a figure showing a constructional example of the facility data registered into the facility database DBb.

As shown in FIG. 8, the facility database DBb stores facility data in which facility information of one record is combined for each facility. The facility information is information that correlates the position information indicating position of facility, the menu information of dish (food and drink) which can be served to customer, such as user, in facility, the information regarding dish (food and drink) that facility selects as a kickback object, and the parking area information, with each facility ID which is identification information of facility. The parking area information indicates an empty state of a parking place owned by the facility, or a parking place which is tied up with the facility and can be utilized for a visiting customer. The empty state of parking place may be information which simply indicates whether there is any empty space, or quantitative information which indicates how many empty spaces is available. For example, according to the facility information of facility ID "W001", it can be turned out that a location of its facility "north latitude XX degrees, and east longitude YY degrees", information on menu which can be supplied in its facility, parking area information which indicates the empty state of parking place and the like, and information on dish (food and drink) of kickback object.

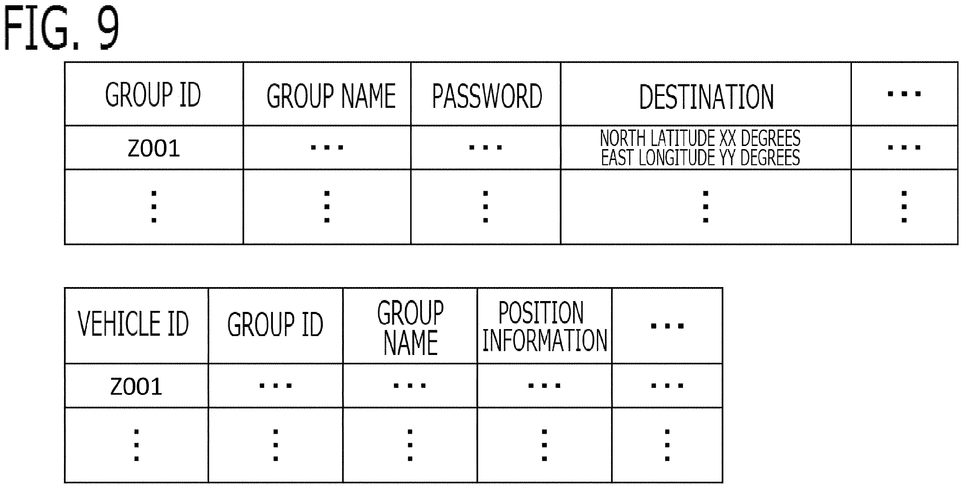

The group database DBc is stored in the storage apparatus 81. The group database DBc is managed by the group control unit 42. The group database DBc is configured, for example using RDB, and stores information on the vehicle group. FIG. 9 is a figure showing a constructional example of group data registered into the group database DBc.

As shown in FIG. 9, the group database DBc stores group data in which group information of one record is combined for each group, and vehicle data in which group information of one record is combined for each vehicle. The group information is information that correlates the group name, the password, and the information on destination, with each group ID which is identification information of the vehicle group. The vehicle information is information that correlates the group ID, and the group name, with each vehicle ID which is identification information of the vehicle. By using these two data, the demand arbitration apparatus 40 can determine that the travel route should be transmitted to which belonging vehicle of which vehicle group.

The route database DBd is stored in the storage apparatus 81. The route database DBd stores the travel route of each belonging vehicle generated by the guide route generation unit 43 described below, and the travel route is read arbitrarily.

### <Group control unit 42>

The group control unit 42 manages a vehicle group which grouped a plurality of vehicles. When the requirement of setting of the vehicle group is transmitted from the vehicle, the group control unit 42 sets the vehicle group, based on a plurality of vehicle IDs which are included in setting information of the vehicle group. When there is a requirement for participating in the vehicle group from the vehicle which does not belong to the vehicle group, the group control unit 42 registers the required vehicle into the vehicle group additionally. At this additional registration, if the password is set for the vehicle group, password authentication may be performed. The group control unit 42 stores the information on the vehicle group in the group database DBc mentioned above, and manages it.

### <Demand arbitration unit 44>

The demand arbitration unit 44 sets a common destination of the vehicle group, based on a requirement received from the belonging vehicle which belongs to the vehicle group. For example, the demand arbitration unit 44 sets a destination received at the initial setting of the vehicle group, as the common destination.

When a requirement of a drop in point is received from the belonging vehicle during each belonging vehicle is traveling along with the travel route to the common destination, the demand arbitration unit 44 sets the drop in point as an intermediate common destination.

For example, when information of facility is received as the requirement of the belonging vehicle (the user), the demand arbitration unit 44 searches a facility corresponding to the received information of facility, from map data (in this example, dynamic map), and sets the facility as the common destination. The demand arbitration unit 44 receives a type of facility, a desired drop in time, and the like, as the requirement of belonging vehicle. For example, when receiving a user requirement of "going to a restaurant which is located within a traveling distance of 30 minutes from the destination", the demand arbitration unit 44 searches restaurants which suit the requirement, from the dynamic map, and transmits a plurality of searched restaurants to the required belonging vehicle. At this time, the demand arbitration unit 44 uses the stored information on facility by referring to the facility database DBb.

Then, the vehicle system 25 (the demand transmission unit 28) of the belonging vehicle shows the information on the plurality of received restaurants to the user, and makes the user select one restaurant from the plurality of restaurants via the user input unit 35. The vehicle system 25 (the demand transmission unit 28) transmits the information on the restaurant selected by the user, to the demand arbitration apparatus 40 (the demand arbitration unit 44). The demand arbitration unit 44 sets the received restaurant as the intermediate common destination. When setting this intermediate common destination, the demand arbitration unit 44 may obtain agreements of other belonging vehicles belonging to the vehicle group. This processing of search and selection of facilities suitable for the requirement may be performed when setting the initial common destination.

The demand arbitration unit 44 determines a reservation time, based on an expected arrival time to the facility; and performs communication with the facility and reserves the facility at the reservation time. For example, when there is the reservation request of the facility from the user, the demand arbitration unit 44 acquires information of an expected arrival time of each belonging vehicle, from the travel route of each belonging vehicle to the facility generated by the guide route generation unit 43; and determines the reservation time, based on the expected arrival time of each belonging vehicle. For example, the demand arbitration unit 44 determines the reservation time in accordance with the expected arrival time of the belonging vehicle which arrives earliest or latest at the facility; and reserves the facility at the reservation time. If the facility cannot be reserved, the demand arbitration unit 44 transmits that to the user; and makes the user select a reselection of facility, a going to the facility without reservation, a cancellation of the requirement for going to the facility, or the like, and performs processing according to the user selection. This processing of reservation of facility may be performed when setting the initial common destination.

When the information on requirement facility is information on restaurant, the demand arbitration unit 44 communicates with the restaurant and orders a menu, based on the user requirement of the belonging vehicle, and informs the expected arrival time to the restaurant. For example, if information on menu of the restaurant which is set as the destination can be acquired and the order can be done beforehand, the demand arbitration unit 44 transmits the information on menu to each belonging vehicle. The vehicle system 25 (the demand transmission unit 28) of the belonging vehicle shows the received information on menu to the user via the user input unit 35, and makes the user select a menu to be ordered. The vehicle system 25 (the demand transmission unit 28) transmits the information on menu selected by the user, to the demand arbitration apparatus 40 (the demand arbitration unit 44). The demand arbitration unit 44 transmits the information on selected menu received from each belonging vehicle, to the restaurant, and orders; and informs the expected arrival time. At this time, the demand arbitration unit 44 may reserve the restaurant at the expected arrival time.

### <Guide route generation unit 43>

The guide route generation unit 43 generates a travel route from the current position of each belonging vehicle to the common destination, about each belonging vehicle belonging to the vehicle group, and transmits to each belonging vehicle. At this time, the guide route generation unit 43 generates the travel route of each belonging vehicle so that the travel route of each belonging vehicle overlaps with each other.

According to this configuration, since the travel route of each belonging vehicle is generated so that the travel route of each belonging vehicle overlaps with each other, the difference of the road states (traffic congestion and the like) from which each belonging vehicle is affected can be reduced, and the difference of the arrival times to the destination of each belonging vehicle can be reduced. When a drop in point occurs during traveling, it is easy to overlap the travel routes to the drop in point of each belonging vehicle, and it is easy to coincide the arrival times to the drop in point.

When the current positions of respective belonging vehicles are equivalent, the guide route generation unit 43 generates the travel route of each belonging vehicle so that the all travel route of each belonging vehicle overlaps with each other. For example, the guide route generation unit 43 sets one belonging vehicle as a representative vehicle, generates the travel route from the current position to the common destination, about the representative vehicle, and generates the travel route which travels the same route (for example, nodes) as the travel route of the representative vehicle, about other belonging vehicles.

When the current positions of respective belonging vehicles are different, the guide route generation unit 43 generates the travel route of the each belonging vehicle so that the travel route of the each belonging vehicle overlaps with each other at least in a part before the common destination. For example, the guide route generation unit 43 sets one belonging vehicle as the representative vehicle, and generates the travel route from the current position to the common destination, about the representative vehicle. The representative vehicle may be set to the belonging vehicle which created the vehicle group first, may be set to the belonging vehicle which required setting of the common destination, or may be set to the belonging vehicle determined at random using a random number and the like. Then, about each of other belonging vehicles, the guide route generation unit 43 generates the travel route so that the route (nodes) overlaps with the travel route of the representative vehicle as much as possible.

For example, the guide route generation unit 43 generates the travel route from the current position of other belonging vehicle to each point of the travel route of the representative vehicle, and determines a point where an evaluation point of the travel route to each point becomes the best. The evaluation point is calculated based on a length of the travel route, a traveling time, a presence or absence of driving in the opposite direction, and the like. Alternatively, as the evaluation point of the travel route to each point, a difference between an arrival time to the destination of other belonging vehicle when using the travel route to each point and an arrival time to the destination of the representative vehicle may be evaluated. As the difference of the arrival times becomes small, the evaluation point becomes good. Then, the guide route generation unit 43 sets a route part of the travel route of the representative vehicle from the common destination to the point where the evaluation point becomes the best, and a travel route from the point where the evaluation point becomes the best to the present point of other belonging vehicle, as the travel route of other belonging vehicle.

If the common destination exists in an intermediate position between the current position of the representative vehicle, and the current position of other belonging vehicle, the evaluation point of a travel route from the current position of other belonging vehicle to the end point (that is, the common destination) of the travel route of the representative vehicle becomes the best; and the travel route of other belonging vehicle which do not overlap with the travel route of the representative vehicle may be set.

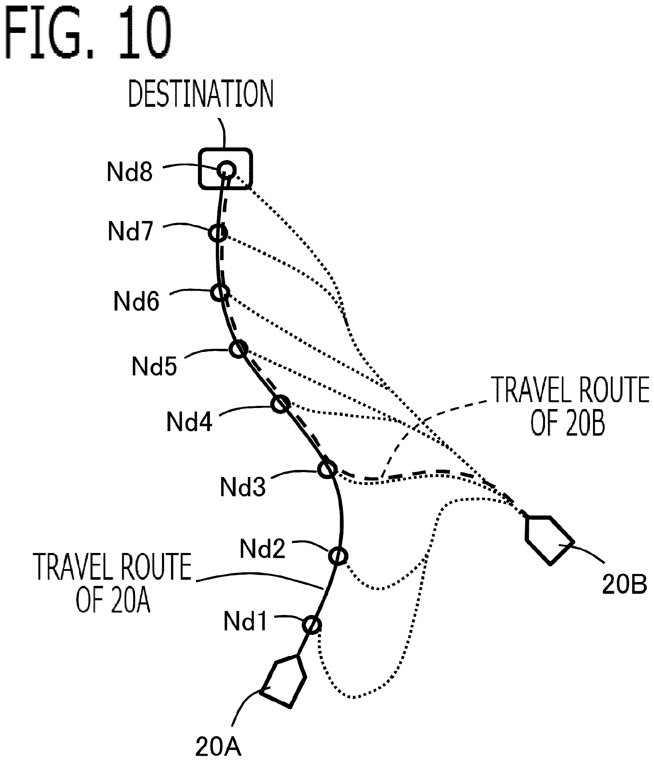

For example, this will be explained using an example shown in FIG. 10. The first vehicle 20A is set as the representative vehicle. About each node of the travel route of the first vehicle 20A (nodes Nd1 to Nd8), the travel route from the current position of the second vehicle 20B to each node of the travel route of the representative vehicle is generated; and a node where the evaluation point of the travel route to each node becomes the best is determined. In the example of FIG. 10, the length and the traveling time of the travel route to the third node Nd3 become the shortest, and the third node Nd3 becomes a point where the evaluation point becomes the best. Accordingly, the travel route of the second vehicle 20B is set to a route part of the travel route of the first vehicle 20A from the destination (the eighth node Nd8) to the third node Nd3, and a travel route from the third node Nd3 to the present point of the second vehicle 20B.

The guide route generation unit 43 generates the travel route to the common destination of each belonging vehicle, considering the road state of dynamic map, the weather condition, and the like. The travel route includes information on a plurality of nodes to the common destination, a target time which passes each node, and the like. The guide route generation unit 43 transmits the generated travel route of each belonging vehicle, to each belonging vehicle via the communication unit 41. The guide route generation unit 43 stores the generated travel route of each belonging vehicle in the route database DBd.

When the road state and the weather condition changed and the travel route needs to be changed, the guide route generation unit 43 may regenerate the travel route to the common destination of each belonging vehicle considering the road state, the weather condition, and the like, and may transmit to each belonging vehicle.

The guide route generation unit 43 generates the travel route of each belonging vehicle so that the arrival time to the common destination of each belonging vehicle is fallen in an allowable time difference range. According to this configuration, the waiting time of the belonging vehicle which arrived first can be suppressed from becoming larger than an allowable time difference, and convenience of user can be increased. A presence or absence of providing the allowable time difference, and a setting value of the allowable time difference may be set by the user of the belonging vehicle.

Especially, when the current positions of each belonging vehicle are different, the difference of the arrival times of each belonging vehicle occurs easily. For example, the guide route generation unit 43 makes the arrival time of each belonging vehicle fall in the allowable time difference range, by increasing or decreasing the travelling speed of each belonging vehicle, or by expanding and contracting the travel route of each belonging vehicle.

When a drop in point is set as an intermediate common destination by the demand arbitration unit 44 during traveling, the guide route generation unit 43 generates a travel route from the current position of each belonging vehicle to the intermediate common destination so that the travel route of each belonging vehicle overlaps with each other, and transmits to each belonging vehicle. Since a processing similar to the generation of the travel route to the initial common destination mentioned above is performed in generation of the travel route to this intermediate common destination, explanation is omitted. The guide route generation unit 43 generates a travel route from the intermediate common destination to the final common destination so that the travel route of each belonging vehicle overlaps with each other, and transmits to each belonging vehicle. A plurality of intermediate common destinations may be set, and a travel route which drops in in order may be set.

### 1-4. Processing Procedure of Vehicle System 25

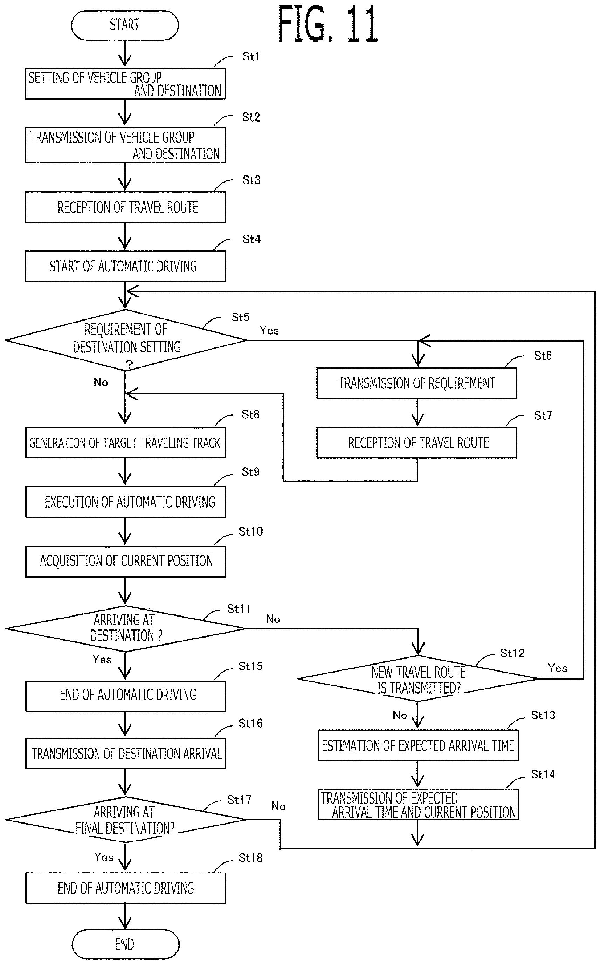

Next, processing procedure of the vehicle system 25 will be explained with reference to the flowchart of FIG. 11. The environment recognition unit 30 constantly recognizes environmental information around the own vehicle including a current position of the own vehicle, based on the detection information of the plurality of sensors S1 to Sm, and outputs the recognized information, to each part of the vehicle system 25.

In the step St1, as mentioned above, the group setting unit 27 receives setting of the vehicle group by user operation of the own vehicle via the user input unit 35 (for example, HMI). The demand transmission unit 28 receives setting of the common destination of the vehicle group by user operation of the own vehicle via the user input unit 35 (for example, HMI) . In the step St2, the group setting unit 27 and the demand transmission unit 28 transmit the information on the created vehicle group, and the information on the common destination, to the demand arbitration apparatus 40 via the communication unit 26. The demand arbitration apparatus 40 generates the travel route of each belonging vehicle, based on the received information, and transmits to each belonging vehicle.

In the step St3, as mentioned above, the travel route reception unit 29 receives the travel route of the own vehicle transmitted from the demand arbitration apparatus 40, via the communication unit 26. Then, in the step St4, the travel route reception unit 29 makes the user select whether or not to approve automatic driving along with the received new travel route, via the user input unit 35. When it was approved, the received travel route is set as the new travel route of the own vehicle, and processing of automatic driving is started.

In the step St5, the demand transmission unit 28 determines whether or not the user of the own vehicle performs a requirement regarding setting of the common destination of the vehicle group (for example, setting of a drop in point), via the user input unit 35 during automatic driving. When the requirement is performed, it advances to the step St6, and when the requirement is not performed, it advances to the step St8. In the step St6, the demand transmission unit 28 transmits the user requirement to the demand arbitration apparatus 40. When there is a requirement regarding setting of the destination from the vehicle system 25, the demand arbitration apparatus 40 generates a travel route to the new common destination of each belonging vehicle, and transmits the travel route to each belonging vehicle.

Then, in the step St7, the travel route reception unit 29 receives the travel route of the own vehicle transmitted from the demand arbitration apparatus 40. Then, the travel route reception unit 29 makes the user select whether or not to approve automatic driving along with the received new travel route, via the user input unit 35. When it was approved, the received travel route is set as the new travel route of the own vehicle.

In the step St8, as mentioned above, the target traveling track generation unit 31 generates a target traveling track for traveling along with the travel route of the own vehicle received from the demand arbitration apparatus 40, considering the around environmental information. Then, in the step St9, as mentioned above, the automatic driving control unit 32 performs the automatic driving of the own vehicle along with the target traveling track.

In the step St10, the environment recognition unit 30 acquires the information on the current position of the own vehicle, based on signal of the GPS receiver. As mentioned above, the environment recognition unit 30 constantly acquires the information on the current position, not only at the time of the step St10.

In the step St11, the target traveling track generation unit 31 determines whether or not the own vehicle arrives at the destination. When determining that it does not arrive, it advances to the step St12, and when determining that it arrives, it advances to the step St15. When the own vehicle arrives at the common destination, it is determined that the own vehicle is not under automatic driving.

In the step St12, the travel route reception unit 29 confirms whether or not a new travel route of the own vehicle is transmitted from the demand arbitration apparatus 40. When transmitted, it advances to the step St6, and when not transmitted, it advances to the step St13. When there is a requirement of a drop in point of other belonging vehicle, a change of the road state and the weather condition, or the like, transmission of the new travel route is performed.

In the step St13, the target traveling track generation unit 31 estimates an expected arrival time which arrives at the common destination from the current position of the own vehicle. In the step St14, the target traveling track generation unit 31 transmits information on the expected arrival time, and information on the current position of the own vehicle, to the demand arbitration apparatus 40, and after that, it returns to the step St5.

On the other hand, in the step St15, the target traveling track generation unit 31 ends generation of the target traveling track, and ends the automatic driving. Then, in the step S16, the target traveling track generation unit 31 transmits a notice of arriving at the common destination, to the demand arbitration apparatus 40 via the communication unit 41.

In the step Stl7, the target traveling track generation unit 31 determines whether or not the own vehicle arrived at the final common destination, based on information on the current position of the own vehicle. When determining that it arrived, it advances to the step St18, and when determining that it did not arrive, it returns to the step St5. In the step St18, the vehicle system 25 ends the automatic driving according to instruction of the demand arbitration apparatus 40.

### 1-5. Processing Procedure of Demand Arbitration System 1

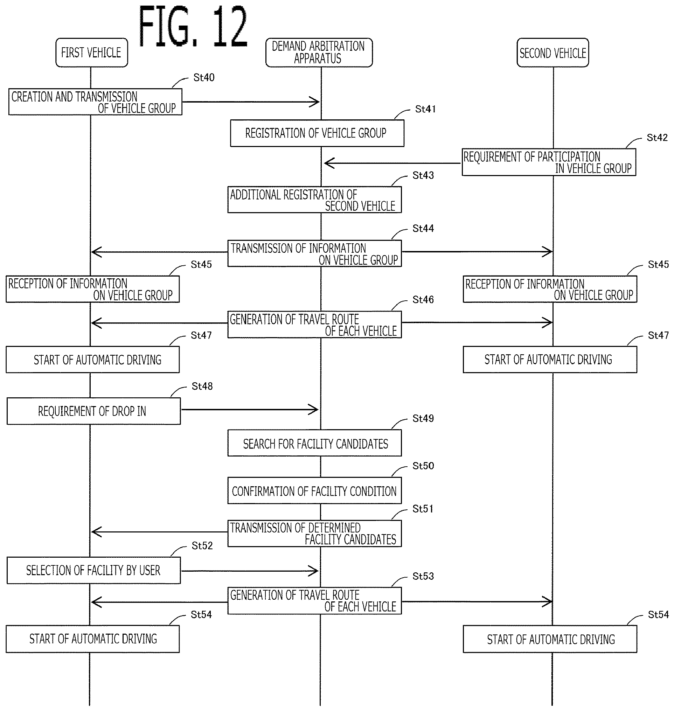

Next, processing procedure of the demand arbitration system 1 will be explained with reference to the sequence diagram of FIG. 12.

In the step St40, since the user (occupant) of the first vehicle performed operation of registration of the vehicle group, and setting of the destination, via the user input unit 35, the first vehicle (the group setting unit 27 and the demand transmission unit 28 of the vehicle system 25) transmits the setting information of the vehicle group inputted by the user, and the setting information of the destination, to the demand arbitration apparatus 40.

In the step St41, the demand arbitration apparatus 40 (the group control unit 42) registers the vehicle group based on the information on the vehicle group received from the first vehicle, and stores the information on the vehicle group in the group database DBc. The demand arbitration apparatus 40 (the demand arbitration unit 44) sets the common destination of the vehicle group, based on the information on the destination received from the first vehicle, and stores the information on the common destination in the group database DBc.

In the step St42, since the user of the second vehicle which is not registered into the vehicle group searched based on the group name and the like, and the requirement of participation in the vehicle group registered by the first vehicle was performed via the user input unit 35, the second vehicle (the group setting unit 27) transmits the requirement of participation in the vehicle group registered by the first vehicle, to the demand arbitration apparatus 40. At this time, if the password is set in the vehicle group, the second vehicle (group setting unit 27) makes the user of the second vehicle input the password via the user input unit 35 and authenticates.

In the step St43, the demand arbitration apparatus 40 (group control unit 42) registers the second vehicle into the vehicle group additionally, and stores information on the changed vehicle group in the group database DBc. Then, in the step St44, the demand arbitration apparatus 40 (the group control unit 42) transmits the information on the changed vehicle group, to each belonging vehicle of the vehicle group. In the step St45, the group setting unit 27 of the first vehicle and the second vehicle receives information on the vehicle group transmitted from the demand arbitration apparatus 40, respectively, and stores it in the storage apparatus 91.

In the step St46, the demand arbitration apparatus 40 (the guide route generation unit 43) generates the travel route from the current position of each belonging vehicle to the common destination, about each belonging vehicle (in this example, the first vehicle, the second vehicle) belonging to the vehicle group, and transmits to each belonging vehicle; and stores the travel route of each belonging vehicle in the route database DBd. The demand arbitration apparatus 40 (the guide route generation unit 43) generates the travel route of each belonging vehicle so that the travel route of each belonging vehicle overlaps with each other.

In the step St47, the travel route reception unit 29 of the first vehicle and the second vehicle receives the travel route of the own vehicle transmitted from the demand arbitration apparatus 40, respectively. Then, the target traveling track generation unit 31 of the first vehicle and the second vehicle generates the target traveling track for traveling along with the travel route of the own vehicle received from the demand arbitration apparatus 40 considering the environmental information around the own vehicle, respectively. Then, the automatic driving control unit 32 of the first vehicle and the second vehicle starts automatic driving of the own vehicle along with the target traveling track, respectively.

In the step St48, since the user of the first vehicle performs a requirement to drop in a restaurant via the user input unit 35 during automatic driving, the first vehicle (the demand transmission unit 28) transmits a requirement of the drop in point to the demand arbitration apparatus 40.

In the step St49, the demand arbitration apparatus 40 (demand arbitration unit 44) searches a plurality of candidates of facilities (for example, restaurant) from the dynamic map, based on the requirement of the drop in point received from the first vehicle. At this time, if a type of restaurant is not specified by the user of the first vehicle, the demand arbitration apparatus 40 (the demand arbitration unit 44) acquires the past order history, the taste information, and the information on acceptable waiting time of the user of the first vehicle, from the user databases DBa, and searches a plurality of candidates of restaurants suitable for the acquired user information.

In the step St50, the demand arbitration apparatus 40 (the demand arbitration unit 44) asks condition of facility, such as a congestion condition at the expected arrival time, an availability of reservation, and an empty state of parking place, to the plurality of searched facilities; and excludes the facility which has a problem in condition, from the candidates of facilities.

Then, in the step St51, the demand arbitration apparatus 40 (the demand arbitration unit 44) transmits the plurality of determined candidates of facilities, to the first vehicle. In the step St52, the vehicle system 25 (the demand transmission unit 28) of the first vehicle shows information on the plurality of received facilities, to the user via the user input unit 35, and makes the user select one facility from the plurality of facilities. The vehicle system 25 (the demand transmission unit 28) transmits information of the facility selected by the user, to the demand arbitration apparatus 40 (the demand arbitration unit 44) . The demand arbitration unit 44 sets the received facility as the intermediate common destination. When setting this intermediate common destination, the demand arbitration unit 44 may obtain a consent of the second vehicle. When performing a reservation of facility, an order of menu, or the like is performed, the demand arbitration unit 44 confirms a requirement to the first vehicle and the second vehicle, communicates with the facility, and performs a reservation of facility, an order of menu, or the like, according to the requirement.

In the step St53, the guide route generation unit 43 generates the travel route from the current position of the first vehicle and the second vehicle to the intermediate common destination about the first vehicle and the second vehicle, respectively, and transmits to the first vehicle and the second vehicle. At this time, the guide route generation unit 43 generates the travel routes of the first vehicle and the second vehicle so that the travel routes of the first vehicle and the second vehicle overlap with each other.

In the step St54, the travel route reception unit 29 of the first vehicle and the second vehicle receives the new travel route of the own vehicle transmitted from the demand arbitration apparatus 40, respectively. Then, the target traveling track generation unit 31 of the first vehicle and the second vehicle generates the target traveling track for traveling along with the travel route of the own vehicle received from the demand arbitration apparatus 40, considering the environmental information around the own vehicle, respectively. Then, the automatic driving control unit 32 of the first vehicle and the second vehicle performs the automatic driving of the own vehicle along with the target traveling track, respectively.

### 2. Embodiment 2

Next, the demand arbitration apparatus 40, the vehicle 20, and the demand arbitration system 1 according to Embodiment 2 will be explained. The explanation for constituent parts the same as those in Embodiment 1 will be omitted. The basic configuration and processing of the demand arbitration apparatus 40 and the like according to the present embodiment are the same as those of Embodiment 1. Embodiment 2 is different from Embodiment 1 in that the group control unit 42 of the demand arbitration apparatus 40 determines a master vehicle of the plurality of belonging vehicles of the vehicle group.

In the present embodiment, the group control unit 42 of the demand arbitration apparatus 40 determines a master vehicle which has a final right to determine and a slave vehicle which follows a determination of the master vehicle, from the plurality of belonging vehicles belonging to the vehicle group. The demand arbitration unit 44 of the demand arbitration apparatus 40 obtains approval of the master vehicle, when setting the common destination.

According to this configuration, whenever the requirement is performed from each belonging vehicle, it is not necessary to generate the new travel route or to arbitrate the requirement of each belonging vehicle, and the travel route can be generated according to the determination of the master vehicle. Accordingly, confusion of decision making is suppressed, and processing load can be reduced.

For example, the group control unit 42 may set the vehicle which created the vehicle group first as the master vehicle, may set the belonging vehicle which obtained consent of each belonging vehicle as the master vehicle, or may determine the belonging vehicle determined at random using a random number or the like, as the master vehicle. The group control unit 42 sets belonging vehicles other than the master vehicle as the slave vehicles. The group control unit 42 stores setting information of the master vehicle and the slave vehicle in the group database DBc.

When setting the common destination of the vehicle group based on the requirement received from the belonging vehicle belonging to the vehicle group, the demand arbitration unit 44 obtains approval of the master vehicle. For example, when receiving the requirement of the drop in point from the slave vehicle, the demand arbitration unit 44 asks whether or not the drop in point is set as the common destination, to the master vehicle.

The demand transmission unit 28 of the master vehicle shows the information on the drop in point required from the slave vehicle, to the user via the user input unit 35, makes the user select whether or not the drop in point is set as the common destination, and transmits the selected result (approval result) to the demand arbitration apparatus 40. When approval of the master vehicle is not obtained, the demand arbitration unit 44 transmits that to the slave vehicle, and does not set the drop in point as the common destination. On the other hand, when approval of the master vehicle is obtained, the demand arbitration unit 44 transmits that to the slave vehicle, and sets the drop in point as the common destination. When a requirement of the drop in point is received from the master vehicle, the demand arbitration unit 44 sets the drop in point as the common destination, without obtaining approval of the slave vehicle.

In the present embodiment, the guide route generation unit 43 of the demand arbitration apparatus 40 generates the travel route from the current position of the master vehicle to the common destination, and generates the travel route from the current position of the slave vehicle to the common destination so that the travel route of the slave vehicle overlaps with the travel route of the master vehicle.

According to this configuration, the rule at generating the travel route of each belonging vehicle is clarified, confusion of decision making is suppressed, and processing load can be reduced.

When the current positions of respective belonging vehicles are equivalent, the guide route generation unit 43 generates the travel route of the slave vehicle so that the all travel route of the slave vehicle overlaps with the travel route of the master vehicle. For example, the guide route generation unit 43 generates the travel route for traveling the same route (for example, nodes) as the travel route of the master vehicle, about the slave vehicle.

When the current positions of respective belonging vehicles are different, the guide route generation unit 43 generates the travel route of the slave vehicle so that the travel route of the slave vehicle overlaps with the travel route of the master vehicle at least in a part before the common destination. Then, about the slave vehicle, the guide route generation unit 43 generates the travel route so that the route (nodes) overlaps with the travel route of the master vehicle as much as possible.

For example, the guide route generation unit 43 generates the travel route from the current position of the slave vehicle to each point of the travel route of the master vehicle, and determines a point where an evaluation point of the travel route to each point becomes the best. The evaluation point is calculated based on a length of the travel route, a traveling time, a presence or absence of driving in the opposite direction, and the like. Alternatively, as the evaluation point of the travel route to each point, a difference between an arrival time to the destination of the slave vehicle when using the travel route to each point and an arrival time to the destination of the master vehicle may be evaluated. As the difference of the arrival times becomes small, the evaluation point becomes good. Then, the guide route generation unit 43 sets a route part of the travel route of the master vehicle from the common destination to the point where the evaluation point becomes the best, and a travel route from the point where the evaluation point becomes the best to the present point of the slave vehicle, as the travel route of the slave vehicle.

If the common destination exists in an intermediate position between the current position of the master vehicle, and the current position of the slave vehicle, the evaluation point of a travel route from the current position of the slave vehicle to the end point (that is, the common destination) of the travel route of the master vehicle becomes the best; and the travel route of the slave vehicle which do not overlap with the travel route of the master vehicle may be set.

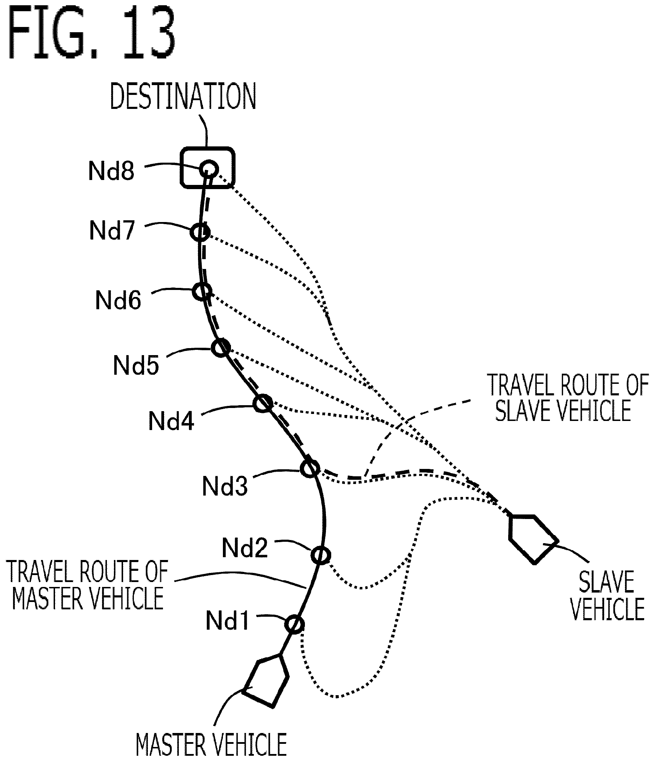

For example, this will be explained using an example shown in FIG. 13. About each node of the travel route of the master vehicle (nodes Nd1 to Nd8), the travel route from the current position of the slave vehicle to each node of the travel route of the master vehicle is generated; and a node where the evaluation point of the travel route to each node becomes the best is determined. In the example of FIG. 13, the length and the traveling time of the travel route to the third node Nd3 become the shortest, and the third node Nd3 becomes a point where the evaluation point becomes the best. Accordingly, the travel route of the slave vehicle is set to a route part of the travel route of the master vehicle from the destination (the eighth node Nd8) to the third node Nd3, and a travel route from the third node Nd3 to the present point of the slave vehicle.

### <Example of Conversion>

In each of the above-mentioned embodiments, there was explained the case where the vehicle system 25 is provided with the environment recognition unit 30, the target traveling track generation unit 31, and the automatic driving control unit 32, in order to perform the automatic driving. However, the vehicle system 25 may be configured so that the user drives . In this case, the driver manipulates a handle, an accelerator pedal, a brake pedal, and the like so as to travel along with the travel route received from the demand arbitration apparatus 40, and gives a command to the vehicle driving apparatus 36.

Although the present disclosure is described above in terms of various exemplary embodiments and implementations, it should be understood that the various features, aspects and functionality described in one or more of the individual embodiments are not limited in their applicability to the particular embodiment with which they are described, but instead can be applied, alone or in various combinations to one or more of the embodiments. It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### REFERENCE SIGNS LIST

1: Demand Arbitration System, 20: Vehicle, 26: Communication Unit, 27: Group Setting Unit, 28: Demand Transmission Unit, 29: Travel Route Reception Unit, 30: Environment Recognition Unit, 31: Target Traveling Track Generation Unit, 32: Automatic Driving Control Unit, 40: Demand Arbitration Apparatus, 41: Communication Unit, 42: Group Control Unit, 43: Guide Route Generation Unit, 44: Demand Arbitration Unit

## Claims

1. A demand arbitration apparatus comprising:
a communication unit that communicates with a plurality of vehicles;
a group control unit that manages a vehicle group which grouped a plurality of vehicles;
a demand arbitration unit that sets a common destination of the vehicle group, based on a requirement received from a belonging vehicle which belongs to the vehicle group; and
a guide route generation unit that generates a travel route from a current position of the each belonging vehicle to the common destination, and transmits to the each belonging vehicle, about the each belonging vehicle belonging to the vehicle group,
wherein the guide route generation unit generates the travel route of the each belonging vehicle so that the travel route of the each belonging vehicle overlaps with each other.

2. The demand arbitration apparatus according to claim 1,
wherein the guide route generation unit generates the travel route of the each belonging vehicle so that an arrival time to the common destination of the each belonging vehicle is fallen in an allowable time difference range.

3. The demand arbitration apparatus according to claim 1 or 2,
wherein, when a requirement of a drop in point is received from the belonging vehicle during the each belonging vehicle is traveling along with the travel route to the common destination, the demand arbitration unit sets the drop in point as an intermediate common destination, and
wherein the guide route generation unit generates a travel route from the current position of the each belonging vehicle to the intermediate common destination so that the travel route of the each belonging vehicle overlaps with each other, and transmits the travel route to the each belonging vehicle.

4. The demand arbitration apparatus according to any one of claims 1 to 3,
wherein, when information on facility is received as the requirement of the belonging vehicle, the demand arbitration unit searches a facility corresponding to the received information on facility, from map data, and sets the facility as the common destination.

5. The demand arbitration apparatus according to claim 4,
wherein the demand arbitration unit determines a reservation time, based on an expected arrival time to the facility, communicates with the facility, and reserves the facility at the reservation time.

6. The demand arbitration apparatus according to claim 4 or 5,
wherein, when information on facility is information on restaurant, the demand arbitration unit communicates with the restaurant and orders a menu, based on a user requirement of the belonging vehicle, and informs an expected arrival time to the restaurant.

7. The demand arbitration apparatus according to any one of claims 1 to 6,
wherein the group control unit determines a master vehicle which has a final right to determine, and a slave vehicle which follows a determination of the master vehicle, from the plurality of belonging vehicles belonging to the vehicle group, and
wherein the demand arbitration unit obtains approval of the master vehicle, when setting the common destination.

8. The demand arbitration apparatus according to claim 7,
wherein the guide route generation unit generates a travel route from the current position of the master vehicle to the common destination, and generates a travel route from the current position of the slave vehicle to the common destination so that the travel route of the slave vehicle overlaps with the travel route of the master vehicle.

9. A vehicle comprising:
a communication unit that communicates with a demand arbitration apparatus which performs generation and transmission of a travel route of each belonging vehicle which belongs to a vehicle group;
a group setting unit that, when a setting of a vehicle group which grouped a plurality of vehicles including an own vehicle or a requirement of participation in the vehicle group which already exists is performed by an user of the own vehicle, transmits information on the setting or the requirement of participation by the user, to the demand arbitration apparatus;
a demand transmission unit that, when a requirement regarding a setting of a common destination of the vehicle group is performed by the user of the own vehicle, transmits the requirement to the demand arbitration apparatus;
a travel route reception unit that receives the travel route of the own vehicle among belonging vehicles which belong to the vehicle group, from the demand arbitration apparatus, and sets the received travel route as the travel route of the own vehicle.

10. The vehicle according to claim 9, further comprising:
an environment recognition unit that recognizes environmental information around the own vehicle including a current position of the own vehicle;
a target traveling track generation unit that generates a target traveling track for traveling along with the travel route of the own vehicle received from the demand arbitration apparatus, considering the environmental information; and
an automatic driving control unit that perform automatic driving of the own vehicle along with the target traveling track.

11. A demand arbitration system comprising:
the demand arbitration apparatus according to any one of claims 1 to 8, and
a plurality of the vehicles according to claim 9 or 10.
